(19) Europäisches Patentamt
European Patent Office
Office européen des brevets

(11) Veröffentlichungsnummer: **0 206 058**
**A1**

(12) **EUROPÄISCHE PATENTANMELDUNG**

(21) Anmeldenummer: **86107752.7**

(22) Anmeldetag: **06.06.86**

(51) Int. Cl.⁴: **C 08 L 69/00**, C 08 K 5/51
//
(C08L69/00, 25:02, 27:18, 51:04)

(30) Priorität: **14.06.85 DE 3521388**

(43) Veröffentlichungstag der Anmeldung: **30.12.86**
**Patentblatt 86/52**

(84) Benannte Vertragsstaaten: **DE FR GB IT NL**

(71) Anmelder: **BAYER AG, Konzernverwaltung RP**
**Patentabteilung, D-5090 Leverkusen 1 Bayerwerk (DE)**

(72) Erfinder: **Kress, Hans-Jürgen, Dr., Scheiblerstrasse 111,**
**D-4150 Krefeld 1 (DE)**
Erfinder: **Müller, Friedemann, Dr., Am Steinacker 5,**
**D-4040 Neuss 21 (DE)**
Erfinder: **Lindner, Christian, Dr., Riehler Strasse 200,**
**D-5000 Köln 60 (DE)**
Erfinder: **Peters, Horst, Dr., Winterberg 25,**
**D-5090 Leverkusen 3 (DE)**
Erfinder: **Buekers, Josef, Kneinstrasse 58a,**
**D-4150 Krefeld 1 (DE)**
Erfinder: **Tödtemann, Gert, Neuenweg 5,**
**D-5632 Wermelskirchen 3 (DE)**

(54) **Thermoplastische Formmassen mit flammwidrigen Eigenschaften.**

(57) Gegenstand der vorliegenden Erfindung sind flammwidrige Formmassen auf der Basis von thermoplastischen Polycarbonaten, Copolymerisaten von Styrolen und Maleinsäureanhydrid, Phosphorverbindungen der Formel (I)

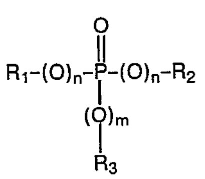

(I)

Tetrafluorethylenpolymerisaten, geringen Mengen an Pfropfpolymerisaten sowie gegebenenfalls Halogenverbindungen, die außerdem Stabilisatoren, Pigmente, Fließmittel, Entformungsmittel und/oder Antistatika enthalten können, und ein Verfahren zu ihrer Herstellung.

BAYER AKTIENGESELLSCHAFT 5090 Leverkusen, Bayerwerk
Konzernverwaltung RP
Patentabteilung PS/by-c

# Thermoplastische Formmassen mit flammwidrigen Eigenschaften

Legierungen aus 5-95 Gew.-% aromatischer Polycarbonate und 95-5 Gew.-% Styrol-Maleinsäureanhydrid-Copolymeren mit 5-30 Gew.-% einpolymerisiertem Maleinsäureanhydrid sind thermoplastische Formmassen, die die Polycarbonate, denen sie in den meisten technologischen Eigenschaften ähneln, vor allem hinsichtlich Beständigkeit gegenüber heißem Wasser sowie hinsichtlich Fließfähigkeit der Schmelzen bei thermoplastischer Verarbeitung deutlich übertreffen (DE 22 52 974).

Ein wesentlicher Nachteil der Legierungen aus aromatischen Polycarbonaten und Styrol-Maleinsäureanhydrid-Copolymeren ist jedoch, daß sie die gebräuchlichen Brandprüfungen, z.B. die Brandprüfungen gemäß UL, Subj. 94, nicht bestehen.

Dieser Nachteil kann zwar durch Einarbeiten geeigneter Brandschutzsysteme, z.B. von aromatischen Bromverbindungen und von Antimontrioxid, oder durch Verwendung bromhaltiger Polycarbonate in Kombination mit Antimontrioxid beseitigt

werden (US 4 151 218); man handelt sich jedoch durch die Verwendung von Metalloxidverbindungen als Flammschutzsynergisten Nachteile ein, beispielsweise Schwierigkeiten bei der Verarbeitbarkeit, insbesondere bei hohen Temperaturen. Formkörper daraus haben manchmal eine mangelhafte Oberfläche, beispielsweise Mikrorisse oder Schlieren.

Aus der DE-OS 33 22 260 sind flammwidrige thermoplastische Formmassen bekannt, die (a) aromatische Polycarbonate, (b) SAN-Pfropfpolymerisate, (c) thermoplastische Polymerisate bevorzugt u.a. Styrol-Maleinsäureanhydrid-Copolymerisate, (d) gegebenenfalls Halogenverbindungen, (e) Antimontrioxid, Antimoncarbonat, Wismuttrioxid oder Wismutcarbonat und (f) feinteiliges Tetrafluorethylenpolymerisat enthalten, wobei dieses über eine wäßrige Emulsion der SAN-Pfropfpolymerisate (b) und gegebenenfalls eine wäßrige Emulsion des thermoplastischen Polymerisats (c) in die Formmasse eingebracht wird, wodurch gute Oberflächen der Formmassen erzielt werden. Gemäß Seite 16 dieser DE-OS läßt sich dieses Prinzip der Einarbeitung von Tetrafluorethylenpolymerisaten auf alle Polycarbonat-haltigen Formmassen übertragen.

Aus der DE-OS 31 30 774 sind Dreikomponentensysteme bekannt, die aus Polycarbonaten, Styrol-Maleinsäureanhydrid-Copolymeren und ABS-Pfropfpolymeren aufgebaut sind. Diese Systeme können noch übliche Zusatzstoffe wie Flammschutzmittel in wirksamen Mengen enthalten. Einzelheiten bezüglich der Flammschutzmittel sind nicht ausgeführt.

Gegenstand der vorliegenden Erfindung sind thermoplastische Formmassen, enthaltend:

A. 50-90 Gew.-Teile eines thermoplastischen aromatischen Polycarbonats,

B. 10-50 Gew.-Teile eines statistisch aufgebauten Copolymerisats aus

1. 95-70 Gew.-%, vorzugsweise 90-75 Gew.-% Styrol, α-Methylstyrol, kernalkyliertem Styrol oder Mischungen der genannten Vinylaromaten und

2. 5-30 Gew.-%, vorzugsweise 10-25 Gew.-% Maleinsäureanhydrid,

C. 0-15 Gew.-Teile einer niedermolekularen oder hochmolekularen Halogenverbindung, insbesondere einer Bromverbindung, bezogen auf jeweils 100 Gew.-Teile aus A. + B. und C., wobei jeweils der Halogengehalt, resultierend aus den Komponenten A. + C., zwischen 3 und 10 Gew.-%, bezogen auf das Gesamtgewicht der Komponenten A. und C., betragen soll, die dadurch gekennzeichnet sind, daß sie zusätzlich

D. 1-20 Gew.-Teile, vorzugsweise 2-15 Gew.-Teile, bezogen auf 100 Gew.-Teile A. + B. und gegebenenfalls C., einer Phosphorverbindung der Formel (I),

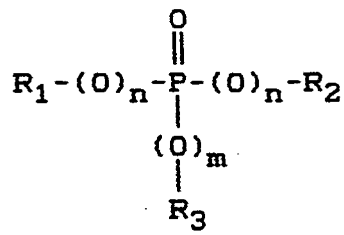 (I)

worin

$R_1$,$R_2$ und $R_3$ unabhängig voneinander ein gegebenenfalls halogeniertes $C_1$-$C_8$-Alkyl oder ein gegebenenfalls halogeniertes $C_6$-$C_{20}$-Aryl sind und

n und m unabhängig voneinander für 0 oder 1 stehen, und

E. 0,05-2,0 Gew.-Teile, insbesondere 0,1-1,0 Gew.-Teile, bezogen auf 100 Gew.-Teile A. + B. und gegebenenfalls C., eines Tetrafluorethylenpolymerisats mit mittleren Teilchengrößen von 0,05-20 µm und einer Dichte von 1,2 - 1,9 g/$cm^3$ enthalten,

wobei die Komponente E. in Form einer koagulierten Mischung von Emulsionen der Tetrafluorethylenpolymerisate E. mit Emulsionen von Pfropfpolymerisaten F. aus

F.1 5-90 Gew.-Teilen, vorzugsweise 30-80 Gew.-Teilen einer Mischung aus:

F.1.1 50-95 Gew.-% Styrol, α-Methylstyrol, kernsubstituiertem Styrol, Methylmethacrylat oder Mischungen daraus, und

F.1.2 50-5 Gew.-% (Meth)Acrylnitril, Methylmethacrylat, Maleinsäureanhydrid, N-substituiertem Maleinimid oder Mischungen daraus, auf

F.2. 95-10 Gew.-Teile , vorzugsweise 70-20 Gew.-Teile eines Kautschuks mit einer Glastemperatur $T_G$ $\leq 10^{\circ}C$,

eingesetzt wird,

das Gewichtsverhältnis Pfropfpolymerisat F. zum Tetrafluorethylenpolymerisat E. zwischen 95:5 und 60:40 liegt und der Gehalt an F., bezogen auf 100 Gew.-Teile A. + B. und gegebenenfalls C., zwischen 0,1 und 3,0 Gew.-Teilen liegt,

sowie gegebenenfalls wirksame Mengen an Stabilisatoren, Pigmenten, Fließmitteln, Entformungsmitteln und/oder Antistatika.

Erfindungsgemäß geeignete, thermoplastische, aromatische Polycarbonate gemäß Komponente A. sind solche auf Basis der Diphenole der Formel (II)

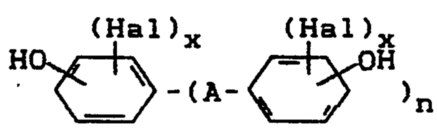 (II)

worin

A eine Einfachbindung, ein $C_1$-$C_5$-Alkylen, ein $C_2$-$C_5$-Alkyliden, ein $C_5$-$C_6$-Cycloalkyliden, -S- oder -$SO_2$-, Hal, Chlor oder Brom,

x 0, 1 oder 2 und

"n" 1 oder 0 sind.

Erfindungsgemäß geeignete Polycarbonate gemäß Komponente A. sind sowohl Homopolycarbonate als auch Copolycarbonate der Diphenole (II).

Die Diphenole der Formel (II) sind entweder literaturbekannt oder nach literaturbekannten Verfahren herstellbar.

Die Herstellung der erfindungsgemäß geeigneten Polycarbonate gemäß Komponente A. ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird.

Die erfindungsgemäß geeigneten Polycarbonate gemäß Komponente A. haben mittlere Gewichtsmittelmolekulargewichte ($\bar{M}w$, gemessen beispielsweise durch Ultrazentrifugation oder Streulichtmessung) von 10 000 bis 200 000, vorzugsweise von 20 000 bis 80 000.

Geeignete Diphenole der Formel (II) sind beispielsweise Hydrochinon, Resorcin, 4,4'-Dihydroxydiphenyl, 2,2-Bis-(4-hydroxyphenyl)propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4-hydroxyphenyl)-propan.

Bevorzugte Diphenole der Formel (II) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Die erfindungsgemäß geeigneten Polycarbonate gemäß Komponente A. können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Polycarbonate sind neben dem Bisphenol-A-Homopolycarbonat die Copolycarbonate von Bisphenol-A mit bis zu 15 Gew.-%, bezogen auf Summe an Diphenolen, an 2,2-Bis-(3,5-dibrom-4-hydroxyphenyl)-propan.

Die erfindungsgemäß geeigneten Styrol-Maleinsäureanhydrid-Copolymeren gemäß Komponente B. sind statistisch aufgebaut. Solche statistisch aufgebauten Copolymerisate können bevorzugt durch eine kontinuierliche Masse- oder Lösungspolymerisation bei unvollständigen Umsätzen aus den entsprechenden Monomeren hergestellt werden.

Als kernalkylierte Styrole sind beispielsweise p-Methylstyrol, Vinyltoluol, 2,4-Dimethylstyrol und deren Mischungen geeignet.

Die Molekulargewichte ($\bar{M}$w. Gewichtsmittel) der erfindungsgemäß geeigneten statistisch aufgebauten Styrol-Maleinsäureanhydrid-Copolymeren gemäß Komponente B. können über einen weiten Bereich variieren. Bevorzugt ist der Bereich von 60 000 bis etwa 200 000 oder eine Grenzviskositätszahl [η] von 0,4 bis 0,9 (gemessen in Dimethylformamid bei 25° C; siehe hierzu Hoffmann, Krömer, Kuhn, Polymeranalytik I., Stuttgart 1977, Seiten 316 ff.).

Erfindungsgemäß geeignete organische Halogenverbindungen C. sind im Prinzip alle, die bei der Herstellung und Verarbeitung der erfindungsgemäßen Formmassen nicht flüchtig und thermisch stabil sind, d.h. dabei kein Halogen abspalten und somit im Brandfall ihre Flammschutzwirkung ausüben können. Insbesondere sind geeignet Decabromdiphenylether, Octabromdiphenyl, Octabromdiphenylether und Tribromtetrachlortoluol, ferner oligomere Bromverbindungen wie beispielsweise Oligocarbonate auf Basis Tetrabrombisphenol A und schließlich auch polymere Bromverbindungen wie beispielsweise hochmolekulare Polycarbonate auf Basis Tetrabrombisphenol A oder kernbromierte Polyphenylenoxide.

Der Halogengehalt, resultierend aus der Komponente C., kann somit auch über das hochmolekulare Polycarbonat gemäß Komponente A. eingebracht werden.

Die erfindungsgemäß einzusetzenden Phosphorverbindungen gemäß Komponente D. sind generell bekannt (s. beispielsweise Ullmann, Enzyklopädie der technischen Chemie, Band 18, Seiten 301 ff., 1979).

Gegebenenfalls halogenierte $C_1$-$C_8$-Alkylreste gemäß $R_1$, $R_2$ oder $R_3$ der Formel (I) sind Chlorethyl, 2-Chlorpropyl, 2,3-Dibrompropyl, Butyl, Methyl und Octyl.

Gegebenenfalls halogenierte $C_6$-$C_{20}$-Arylreste gemäß $R_1$, $R_2$ oder $R_3$ der Formel (I) sind Chlorphenyl, Bromphenyl, Pentachlorphenyl, Pentabromphenyl, Phenyl, Kresyl, Isopropylphenyl und Naphthyl.

Erfindungsgemäß einsetzbare Phosphorverbindungen gemäß Formel (I) sind Tributylphosphat, Tris-(2-chlorethyl)-phosphat, Tris-(2,3-dibrompropyl)phosphat, Triphenylphosphat, Trikresylphosphat, Diphenylkresylphosphat, Diphenyloctylphosphat, Diphenyl-2-ethylkresylphosphat, Tri(isopropylphenyl)phosphat, halogensubstituierte Arylphosphate, Methylphosphonsäuredimethylester, Methylphosphonsäurediphenylester, Phenylphosphonsäurediethylester, Triphenylphosphinoxid und Trikresylphosphinoxid.

Die erfindungsgemäß geeigneten Tetrafluorethylenpolymerisate gemäß Komponente E. sind Polymere mit Fluorgehalten von 65-76 Gew.-%, vorzugsweise 70-76 Gew.-%. Beispiele sind Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomerer. Derartige Polymerisate sind bekannt. Sie können nach bekannten Verfahren

hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drücken von 7-71 $kg/cm^2$ und bei Temperaturen von 0-200° C, vorzugsweise bei Temperaturen von 20-100° C (nähere Einzelheiten siehe beispielsweise US-Patent 2 393 967).

Die erfindungsgemäßen geeigneten Polytetrafluorethylene haben mittlere Teilchengrößen von 0,05 bis 20 µm, vorzugsweise 0,08 bis 10 µm und eine Dichte von 1,2-1,9 $g/cm^3$.

Durch den Zusatz von Tetrafluorethylenpolymerisaten wird insbesondere das Abtropfen der Formmassenschmelze während des Brandvorganges reduziert oder ganz verhindert.

Stellt man nun die erfindungsgemäßen Formmassen beispielsweise durch Schmelzcompoundierung in Knetern oder Extrudern aus Granulaten oder Pulvern der Komponenten A. bis D. sowie einem Polytetrafluorethylen-Pulver mit gegenüber den erfindungsgemäßen Polytetrafluorethylenen größeren mittleren Teilchengrößen und Dichten her, so werden zwar Formmassen hoher Flammwidrigkeit erhalten; Formkörper daraus haben aber manchmal eine mangelhafte Oberfläche, beispielsweise Mikrorisse oder Schlieren.

Das wird mit Sicherheit vermieden, wenn die sehr feinteiligen und zudem ungesinterten Tetrafluorethylenpolymerisate in Form einer koagulierten Mischung von Emulsionen der Tetrafluorethylenpolymerisate E. mit Emulsionen der Pfropfpolymerisate F. eingesetzt werden.

Zur Herstellung einer entsprechenden Mischung wird zuerst eine wäßrige Emulsion (Latex) eines Pfropfpolymerisates F. mit mittleren Latexteilchengrößen von 0,1 bis 2,0 µm, insbesondere 0,2 bis 0,6 σm, mit einer feinteiligen Emulsion eines Tetrafluorethylenpolymerisates in Wasser mit mittleren Teilchengrößen von 0,05 bis 20 µm, insbesondere von 0,08 bis 10 µm vermischt; geeignete Tetrafluorethylenpolymerisat-Emulsionen besitzen üblicherweise Feststoffgehalte von 30 bis 70 Gew.-%, insbesondere von 50-60 Gew.-%. Die einzusetzenden Emulsionen der Pfropfpolymerisate F. besitzen Feststoffgehalte von 25 bis 60 Gew.-%, insbesondere von 30 bis 45 Gew.-%.

In der Emulsionsmischung liegt das Gewichtsverhältnis Pfropfpolymerisat F. zum Tetrafluorethylenpolymerisat E. zwischen 95:5 und 60:40. Anschließend wird die Emulsionsmischung in bekannter Weise koaguliert, beispielsweise durch Sprühtrocknung, Gefriertrocknung oder Koagulation mittels Zusatz von anorganischen oder organischen Salzen, Säuren, Basen oder organischen, mit Wasser mischbaren Lösungsmitteln, wie Alkoholen, Ketonen, vorzugsweise bei Temperaturen von 20 bis 150° C, insbesondere von 50 bis 100° C. Falls erforderlich, kann bei 50 bis 200° C, bevorzugt 70 bis 100° C getrocknet werden.

Geeignete Tetrafluorethylenpolymerisat-Emulsionen sind handelsübliche Produkte und werden beispielsweise von der Firma DuPont als Teflon® 30 N angeboten.

Bezüglich der schwierigen Verarbeitung von Polytetrafluorethylenen sei noch auf FR-PS 1 412 767 verwiesen; bezüglich der Einarbeitung von Polytetrafluorethylenen in

Thermoplaste, wie aromatische Polycarbonate oder Polymerisate von ungesättigten Monomeren, sei noch auf US-Patent 3 294 871 hingewiesen sowie auf US-Patent 3 005 795, insbesondere Spalten 3/4, wo Fällung und Koagulation erwähnt sind.

Zur Herstellung der Pfropfpolymerisate gemäß Komponente F. geeignete Kautschuke sind insbesondere Polybutadien, Butadien/Styrol-Copolymerisate mit bis zu 30 Gew.-%, bezugen auf Kautschukgewicht, eines niederen Alkylesters von Acryl- oder Methacrylsäure (beispielsweise Methylmethacrylat, Ethylacrylat, Methylacrylat oder Ethylmethacrylat). Weitere geeignete Kautschuke sind beispielsweise Polyisopren oder Polychloropren. Geeignet sind weiterhin Alkylacrylatkautschuke auf der Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkender ethylenisch ungesättigter Monomere enthalten. Solche Vernetzer sind z.B. Alkylendioldi(meth)-acrylate, Polyesterdi-(meth)-acrylate,Divinylbenzol, Tri-vinylbenzol, Triallylcyanurat, Allyl-(meth)-acrylat, Butadien oder Isopren. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie

Styrol und/oder Acrylnitril, als Kern enthalten. Andere geeignete Kautschuke sind z.B. EPDM-Kautschuke, also Kautschuke aus Ethylen, Propylen und einem unkonjugierten Dienmonomer.

Bevorzugte Kautschuke zur Herstellung der Pfropfpolymerisate F. sind Dien- und Alkylacrylatkautschuke.

Die Kautschuke liegen in den Pfropfpolymerisaten F. in Form wenigstens partiell vernetzter Teilchen einer mittleren Teilchengröße von 0,1 bis 2,0 µm, insbesondere 0,2 bis 0,6 µm vor. Die Pfropfpolymerisate F. werden durch radikalische Pfropfcopolymerisation der eingangs definierten Monomerengemische aus F.1.1 und F.1.2 in Gegenwart der zu pfropfenden Kautschuke F.2 hergestellt und sind durchweg bekannt. Bevorzugte Herstellungsverfahren für die Pfropfpolymerisate F. sind Emulsions-, Lösungs-, Masse- oder Suspensionspolymerisation. Besonders bevorzugte Pfropfpolymerisate F. sind die sogenannten ABS-Polymerisate. Als kernsubstituierte Styrole seien Halogenstyrole und p-Methylstyrol erwähnt.

Da der Einsatz der erfindungsgemäß zu verwendenden Pfropfpolymerisate F. durch Vorabmischung ihrer Emulsionen mit Emulsionen der Komponente E. erfolgt, ist die Herstellung der Komponente F. nach dem Verfahren der Emulsionspolymerisation am zweckmäßigsten.

Das eingesetzte Verhältnis von Polytetrafluorethylen E. und Pfropfpolymerisat F. ist so zu wählen, daß der Gesamtgehalt an F. in der Mischung aus A. + B. und gegebenenfalls C. zwischen 0,1 und 3,0 Gew.-Teilen liegt.

Die erfindungsgemäßen thermoplastischen Formmassen können weitere für Polycarbonate oder für die thermoplastischen Polymerisate bekannte Zusätze wie Stabilisatoren, Pigmente, Fließmittel, Entformungsmittel und/oder Antistatika enthalten.

Die erfindungsgemäßen Formmassen, enthaltend die Komponenten A., B., D., E und F sowie gegebenenfalls C. und/oder gegebenenfalls weitere bekannte Zusätze wie Stabilisatoren, Pigmente, Fließmittel, Entformungsmittel und/oder Antistatika, werden hergestellt, indem man die jeweiligen Bestandteile in bekannter Weise vermischt und bei Temperaturen von 200-330°C in üblichen Aggregaten wie Innenknetern, Extrudern oder Doppelwellenschnecken schmelzcompoundiert oder schmelzextrudiert, oder indem man die Lösungen der jeweiligen Komponenten in geeigneten organischen Lösungsmitteln, beispielsweise in Chlorbenzol, mischt und die Lösungsgemische in üblichen Aggregaten, beispielsweise in Eindampfextrudern, eindampft.

Gegenstand der vorliegenden Erfindung ist somit auch ein Verfahren zur Herstellung von thermoplastischen Formmassen, enthaltend die Komponenten A., B., D., E., F. und gegebenenfalls die Komponente C., Stabilisatoren, Pigmente, Fließmittel, Entformungsmittel und/oder Antistatika , das dadurch gekennzeichnet ist, daß man die Komponenten A., B., D., E., F. und gegebenenfalls die Komponente C., Stabilisatoren, Pigmente, Fließmittel, Entformungsmittel und/oder Antistatika in bekannter Weise vermischt und danach bei Temperaturen von 200-330°C in gebräuchlichen Aggregaten schmelzcompoundiert oder schmelzextrudiert, oder daß man die Lösungen dieser

Komponenten in geeigneten organischen Lösungsmitteln mischt und danach die Lösungsgemische in gebräuchlichen Aggregaten eindampft.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur. Hierbei kann die Komponente D. auch als vorab hergestelltes Konzentrat in A. oder B. eingesetzt werden.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z.B. für Haushaltsgeräte wie Saftpressen, Kaffeemaschinen, Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Eine weitere Form der Verarbeitung ist die Herstellung von Formkörpern durch Tiefziehen oder Warmverformen zuvor durch Extrusion hergestellter Platten oder Folien.

Teilchengröße bedeutet immer mittlerer Teilchendurchmesser $d_{50}$, ermittelt durch Ultrazentrifugenmessungen nach W. Scholtan et al., Kolloid-Z. u. Z. Polymere 250 (1972) 782-796.

Beispiele

Eingesetzte Legierungskomponenten

A.

Polycarbonat aus 2,2-Bis-(4-hydroxyphenyl)-propan (Bisphenol A) mit einer relativen Lösungsviskosität von 1,320, gemessen in Methylenchlorid bei 23° C und einer Konzentration von 0,5 Gew.-%.

Herstellung der Copolymerharze B.

In einem ummantelten Gefäß, das mit Innenthermometer, Rührer, Ein- und Auslaß versehen ist, werden 750 Teile eines Gemisches mit einer Zusammensetzung gemäß Tabelle 1 vorgelegt und auf 130° C erwärmt. Dann wird ein Monomerstrom von 110 Tl. derselben Zusammensetzung so zudosiert und gleichzeitig dieselbe Menge an Polymerlösung dem Gefäß entnommen, daß der Füllstand im Gefäß gehalten wird. Dem Monomerstrom werden kontinuierlich ca. 0,05 Tl/Std. tert.-Butylperpivalat (75 %ig in Dibutylphthalat) zugefügt. Nach ca. 2 Std. hat sich ein konstanter Umsatz von ca. 40 % eingestellt. Die Polymerlösung wird mit 0,1 Gew.-% 2,6-Di-t-butyl-p-kresol versetzt und anschließend auf einem Ausdampfextruder von Monomeren und flüchtigen Bestandteilen befreit.

<u>Tabelle 1</u> Zusammensetzung der Einsatzmonomeren und der Copolymerisate B.

| | Einsatzmonomere (Gew.-%) | | Copolymerisat (Gew.-%) | |
|---|---|---|---|---|
| | Styrol | Maleinsäureanhydrid | Styrol | Maleinsäureanhydrid |
| B.1 | 93,2 | 6,8 | 83 | 17 |
| B.2 | 92,0 | 8,0 | 80 | 20 |

D. Triphenylphosphat

E.1 Tetrafluorethylenpolymerisat als koagulierte Mischung aus einem SAN-Pfropfpolymerisat F. und einer Tetrafluorethylenpolymerisat-Emulsion in Wasser. Gehalt an Tetrafluorethylenpolymerisat in der Mischung: 10 Gew.-%, bezogen auf Mischung PTFE-SAN-Pfropfpolymerisat. Die Tetrafluorethylenpolymerisat-Emulsion besitzt einen Feststoffgehalt von 60 %; die Teilchengröße liegt zwischen 0,05 und 0,5 µm.

Herstellung von E.1: Die Emulsion des Tetrafluorethylenpolymerisats wurde mit der Emulsion des SAN-Pfropfpolymerisats F. vermischt und mit 1,8 Gew.-%, bezogen auf Polymerfeststoff, phenolischer Antioxidantien stabilisiert. Bei 85-95° C wird die Mischung mit einer wäßrigen Lösung von $MgSO_4$ (Bittersalz) und Essigsäure bei pH 4-5 koaguliert, filtriert und bis zur praktischen Elektrolytfreiheit gewaschen, anschließend durch Zentrifugation von der Hauptmenge Wasser befreit und danach bei 100° C zu einem Pulver getrocknet. Dieses Pulver kann dann mit den weiteren Komponenten in den beschriebenen Aggregaten compoundiert werden.

E.2 Tetrafluorethylenpolymerisat in Pulverform mit einer Teilchengröße von 500-650 µm und einer Dichte von 2,18 bis 2,20 $g/cm^3$ von Hoechst (Hostaflon TF 2026).

F. SAN-Pfropfpolymerisat von 50 Gew.-% Styrol-Acrylnitril-Gemisch (im Gew.-Verhältnis von 72:28) auf 50 % teilchenförmiges Polybutadien einer mittleren Teilchengröße ($d_{50}$) von 0,4 µm, erhalten durch Emulsionspolymerisation.

Die Compoundierung der Komponenten A., B., D. und E. erfolgte auf einem 3-Liter-Innenkneter bei Temperaturen zwischen 200 und 220° C.

Die Herstellung der Formkörper erfolgte auf einer Spritzgießmaschine bei 260° C.

Das Brandverhalten der Proben wurde nach UL-Subj. 94 V in Prüfkörperdicken von 1,6 und 3,2 mm gemessen. Der UL 94 V-Test wird wie folgt durchgeführt:

Substanzproben werden zu Stäben der Abmessungen 127 x 12,7 x 1,6 mm bzw. 127 x 12,7 x 3,2 mm geformt. Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 s Dauer entzündet. Die Brenneigenschaften nach jedem Zündvorgang werden beobachtet und danach die Probe bewertet. Zum Entzünden der Probe wird ein Bunsenbrenner mit einer 10 mm (3/8 inch) hohen blauen Flamme von Erdgas mit einem Wärmeinhalt von 3,73 x $10^4$ kH/$m^3$ (1,000 BTU per cubic foot) benutzt.

Die UL 94 V-O-Klassifizierung umfaßt die nachstehend beschriebenen Eigenschaften von Materialien, die gemäß der UL 94-Vorschrift geprüft wurden. Die Materialien in dieser Klasse enthalten keine Proben, die länger als 10 s nach jeder Einwirkung der Testflamme brennen; sie zeigen keine Gesamtflammzeit von mehr als 50 s bei der zweimaligen Flammeinwirkung auf jeden Probensatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL 94-Klassifizierungen bezeichnen Proben, die eine längere Nachbrennzeit aufweisen (Klassifizierung V-1) oder die außerdem brennende Tropfen oder Teilchen abgeben, die die unterhalb der Probe angeordnete Watte entzünden (Klassifizierung V-2). Die Klassifizierung "n.b." heißt "nicht bestanden" und bedeutet, daß die Proben eine Nachbrennzeit von $\geq$30 s aufweisen.

Die Beurteilung der Formkörperoberfläche in bezug auf Oberflächenstörungen, wie Schlieren, erfolgte visuell an Prüfkörpern der Abmessung 127 x 12,7 x 1,6 mm.

Die Bestimmung der Kerbschlagzähigkeit erfolgte in Anlehnung an DIN 53 453/ISO R 179 an Normkleinstäben der Abmessung 50 x 6 x 4 mm, wobei für die Kerbschlagzähigkeit die Stäbe mit einer V-förmigen Kerbe der Kerbtiefe 2,7 mm versehen wurden.

Aus der folgenden Tabelle können die genauen Zusammensetzungen der geprüften Formmassen sowie die erhaltenen Prüfdaten entnommen werden:

| | A (Gew.-Tl.) | B1. (Gew.-Tl.) | B.2 (Gew.-Tl.) | D (Gew.-Tl.) | E.1 (Gew.-Tl.) | E.2 (Gew.-Tl.) | Ul-94 V 3,2 mm | Ul-94 V 1,6 mm | Kerbschlagzähigkeit ($kJ/m^2$) | Oberflächenbeschaffenheit |
|---|---|---|---|---|---|---|---|---|---|---|
| Vergleichsversuche | | | | | | | | | | |
| V1 | 80 | 20 | | | | | n.b.* | n.b. | 18 | |
| V2 | 80 | | 20 | | | | n.b. | n.b. | 12 | |
| V3 | 70 | 30 | | 10 | | 0,25 | VO | V1 | - | Schlieren |
| Versuche gemäß vorliegender Erfindung | | | | | | | | | | |
| E1 | 80 | 20 | | 10 | 3,0 | | VO | VO | 12 | schlierenfrei |
| E2 | 70 | 30 | | 10 | 3,0 | | VO | - | 16 | schlierenfrei |
| E3 | 80 | | 20 | 10 | 3,0 | | VO | VO | 13 | schlierenfrei |
| E4 | 70 | | 30 | 10 | 3,0 | | VO | V1 | 15 | schlierenfrei |

*) n.b. = nicht bestanden

## Patentansprüche

1. Thermoplastische Formmassen, enthaltend

   A. 50-90 Gew.-Teile eines thermoplastischen aromatischen Polycarbonats,

   B. 10-50 Gew.-Teile eines statistisch aufgebauten Copolymerisats aus

      1. 95-70 Gew.-%, Styrol, α-Methylstyrol, kernalkyliertem Styrol oder Mischungen der genannten Vinylaromaten und

      2. 5-30 Gew.-% Maleinsäureanhydrid,

   C. 0-15 Gew.-Teile einer niedermolekularen oder hochmolekularen Halogenverbindung bezogen auf jeweils 100 Gew.-Teile aus A. + B. und C., wobei jeweils der Halogengehalt, resultierend aus den Komponenten A. + C., zwischen 3 und 10 Gew.-%, bezogen auf das Gesamtgewicht der Komponenten A. und C., betragen soll, die dadurch gekennzeichnet sind, daß sie zusätzlich

   D. 1-20 Gew.-Teile, bezogen auf 100 Gew.-Teile A. + B. und gegebenenfalls C., einer Phosphorverbindung der Formel (I),

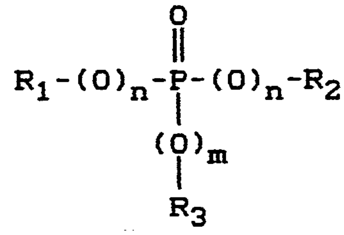

(I)

worin

$R_1$,$R_2$ und $R_3$ unabhängig voneinander ein gegebenenfalls halogeniertes $C_1$-$C_8$-Alkyl oder ein gegebenenfalls halogeniertes $C_6$-$C_{20}$-Aryl sind und

n und m unabhängig voneinander für 0 oder 1 stehen, und

E. 0,05-2,0 Gew.-Teile, bezogen auf 100 Gew.-Teile A. + B. und gegebenenfalls C., eines Tetrafluorethylenpolymerisats mit mittleren Teilchengrößen von 0,05-20 µm und einer Dichte von 1,2 - 1,9 $g/cm^3$ enthalten, wobei die Komponente E. in Form einer koagulierten Mischung von Emulsionen der Tetrafluorethylenpolymerisate E. mit Emulsionen von Pfropfpolymerisaten F. aus

F.1 5-90 Gew.-Teilen einer Mischung aus:

F.1.1 50-95 Gew.-% Styrol, α-Methylstyrol, kernsubstituiertem Styrol, Methylmethacrylat oder Mischungen daraus, und

F.1.2 50-5 Gew.-% (Meth)Acrylnitril, Methylmethacrylat, Maleinsäureanhydrid, N-substituiertem Maleinimid oder Mischungen daraus, auf

F.2. 95-10 Gew.-Teile eines Kautschuks mit einer Glastemperatur $T_G \leq 10^{\circ} C$,

eingesetzt wird,

das Gewichtsverhältnis Pfropfpolymerisat F. zum Tetrafluorethylenpolymerisat E. zwischen 95:5 und 60:40 liegt und der Gehalt an F., bezogen auf 100 Gew.-Teile A. + B. und gegebenenfalls C., zwischen 0,1 und 3,0 Gew.-Teilen liegt.

2. Formmassen gemäß Anspruch 1, dadurch gekennzeichnet, daß die Komponente D. in Mengen von 2 bis 15 Gew.-Teilen vorliegt.

3. Formmassen gemäß Ansprüche 1 und 2, dadurch gekennzeichnet, daß die Komponente E. in Mengen von 0,1 bis 1,0 Gew.-Teilen vorliegt.

4. Formmassen gemäß Ansprüche 1 bis 3, dadurch gekennzeichnet, daß die Pfropfpolymerisate F. aus 30 bis 80 Gew.-Teilen einer Mischung aus F.1.1 und F.1.2 auf 70 bis 20 Gew.-Teile eines Kautschuks F.2 hergestellt sind.

5. Formmassen gemäß Ansprüche 1 bis 4, dadurch gekennzeichnet, daß sie zusätzlich mindestens einen Zusatz ausgewählt aus der Gruppe der Stabilisatoren, Pigmente, Fließmittel, Entformungsmittel und Antistatika enthalten.

6. Verfahren zur Herstellung der Formmassen gemäß Ansprüche 1 bis 4, dadurch gekennzeichnet, daß man die Komponenten A., B., D., E. und F. sowie gegebenenfalls C. in bekannter Weise vermischt und danach bei Temperaturen von 200 bis 330°C in gebräuchlichen Aggregaten schmelzcompoundiert oder schmelzextrudiert.

7. Verfahren zur Herstellung der Formmassen gemäß Ansprüche 1 bis 4, dadurch gekennzeichnet, daß man Lösungen der Komponenten A., B., D., E. und F. sowie gegbenenfalls C. in geeigneten organischen Lösungsmitteln mischt und danach die Lösungsgemische in gebräuchlichen Eindampfaggregaten eindampft.

8. Verfahren zur Herstellung der Formmassen des Anspruchs 5 gemäß den Ansprüchen 6 und 7, dadurch gekennzeichnet, daß man mindestens einen Zusatz, ausgewählt aus der Gruppe der Stabilisatoren, Pigmente, Fließmittel, Entformungsmittel und Antistatika, einbezieht.

Europäisches Patentamt

**EUROPÄISCHER RECHERCHENBERICHT**

0206058

Nummer der Anmeldung

EP 86 10 7752

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| P,X | EP-A-0 174 493 (BAYER)<br>* Ansprüche 1-6 *<br>--- | 1-8 | C 08 L 69/00 //<br>C 08 K 5/51<br>(C 08 L 69/00<br>C 08 L 25:02<br>C 08 L 27:18<br>C 08 L 51:04 ) |
| P,A | EP-A-0 183 116 (BAYER)<br>* Ansprüche 1-5 *<br>--- | 1-8 | |
| A | EP-A-0 103 230 (BAYER)<br>* Ansprüche 1-3 *<br>--- | 1 | |
| A | FR-A-2 239 512 (GOODYEAR)<br>* Ansprüche 1,2; Seite 2, Zeilen 4-11 *<br>--- | 1 | |
| A | FR-A-2 427 360 (BORG-WARNER)<br>* Ansprüche 1-13 *<br>--- | 1 | RECHERCHIERTE SACHGEBIETE (Int. Cl.4) |
| A | US-A-4 308 196 (F.J. LIMBERT)<br>* Ansprüche 1-23 *<br>--- | 1 | C 08 L<br>C 08 K |
| A | US-A-3 773 715 (T. LARGMAN et al.)<br>* Ansprüche 1-11 *<br>--- | 1 | |
| A | FR-A-2 223 424 (TEIJIN)<br>* Ansprüche 1-6 *<br>--- -/- | 1 | |

Der vorliegende Recherchenbericht wurde für alle Patentansprüche erstellt.

| Recherchenort | Abschlußdatum der Recherche | Prüfer |
|---|---|---|
| DEN HAAG | 02-10-1986 | DECOCKER L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches Patentamt

# EUROPÄISCHER RECHERCHENBERICHT

0206058

Nummer der Anmeldung

EP 86 10 7752

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE-A-2 162 437 (ALLIED CHEMICAL CORP.)<br>* Ansprüche 1-6 *<br>--- | 1 | |
| A | GB-A-1 401 863 (GENERAL ELECTRIC)<br>* Ansprüche 1-10 *<br>--- | | |
| A | EP-A-0 019 127 (BAYER)<br>* Ansprüche 1-10; Seite 10, Zeile 17 - Seite 12, Zeile 5 *<br>----- | 1 | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 02-10-1986 | DECOCKER L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82